# EUROPÄISCHE PATENTSCHRIFT

(11) **EP 2 256 395 B1**
(45) Veröffentlichungstag und Bekanntmachung des Hinweises auf die Patenterteilung: **06.11.2013**
(21) Anmeldenummer: 08016102.9
(22) Anmeldetag: 12.09.2008
(51) Int. Cl.: F16L 37/12

(54) **Flanschelement**
Flange element
Elément de bride

(30) Priorität: 12.09.2007 DE 102007043381
(43) Veröffentlichungstag der Anmeldung: 01.12.2010
(73) Patentinhaber: SVT Gmbh, 58332 Schwelm (DE)
(72) Erfinder: Mertens, Klaus, 58640 Iserlohn (DE)
(74) Vertreter: Maxton Langmaack & Partner

(56) Entgegenhaltungen:
- GB-A- 1 215 000
- GB-A- 2 009 352
- US-A- 3 199 553
- US-A- 4 598 936

## Beschreibung

Die vorliegende Erfindung betrifft ein Flanschelement einer Fluid-Verladeeinrichtung zum Umladen eines Fluides, wobei das Flanschelement einen umlaufenden Rohr- oder Schlauchflansch aufweist. Des Weiteren wird ein Verfahren zur dichtenden Verbindung einer Flanschverbindung einer Fluid-Verladeeinrichtung mit einer Anbindung an einen Speicher zur Be- oder Entladung eines Fluides vorgeschlagen.

Fluid-Verladeeinrichtungen finden sich typischerweise als Anwendungen der chemischen Industrie, wo ab Werk Schiffe, Tanklastwagen oder Eisenbahnkesselwagen be- oder entladen werden müssen. Siehe z.B. GB 2009352. Insbesondere im Bereich der petrochemischen Industrie ist der Umschlag von Flüssiggas, abgekürzt LNG, von steigender Bedeutung.

Fluid-Verladeeinrichtungen können flüssige wie auch gasförmige Stoffe ver- beziehungsweise entladen. Es können aggressive wie auch zähe Substanzen darunter fallen, wie beispielsweise Chlor, Flüssigschwefel, Ethylen, Pech oder Bitumen. Eine Temperatur dieser zu verladenden Fluide kann zwischen - 200 °C bis + 300 °C betragen.

Bei der Verladung von Fluiden kommet es darauf an, dass alle notwendigen Sicherheitsmaßnahmen getroffen werden, dass hierbei kein Fluid in die Umgebung entweichen kann. Neben der Gefahr einer Umweltverschmutzung können einige der zu verladenden Fluide ansonsten zu erheblichen Gesundheitsbeeinträchtigungen führen beziehungsweise Gefahrquellen für die in der Umgebung beschäftigten Personen sein.

Aufgabe der vorliegenden Erfindung ist es, ein sicheres Verladen eines Fluides zu ermöglichen, wobei eine mögliche Gefährdung eines Bedieners einer derartigen Anlage minimiert wird.

Diese Aufgabe wird mit einem Flanschelement einer Fluid-Verladeeiririchtung zum Umladen eines Fluides mit den Merkmalen des Anspruchs 1 sowie mit einem Verfahren zur dichtenden Verbindung einer Flanschverbindung einer Fluid-Verladeeinrichtung mit den Merkmalen des Anspruchs 11 gelöst. Weitere vorteilhafte Ausgestaltungen und Weiterbildungen sind in den jeweiligen Unteransprüchen angegeben.

Gemäß der Erfindung wird ein Flanschelement einer Fluid-Verladeeinrichtung zur Übertragung eines Fluides vorgeschlagen, wobei das Flanschelement einen umlaufenden Rohr- oder Schlauchflansch aufweist, der an einem Gegenstück fluiddicht befestigbar ist und das Flanschelement und das Gegenstück relativ zueinander beweglich sind, eine Befestigungsvorrichtung zur fluiddichten Endlagenfixierung des Rohr- oder Schlauchflansches mit dem Gegenstück vorgesehen ist, und eine Kopplungseinheit vorhanden ist zum Sichern des Gegenstücks und des Rohr- oder Schlauchflansches in einer Vorposition zum Feinpositionieren, bevor mittels der Befestigungsvorrichtung die fluiddichte Endlagenfixierung erfolgt.

Das vorgeschlagene Flanschelement trägt hierbei dem Umstand Rechnung, dass zwischen dem Rohr- oder Schlauchflansch sowie dem entsprechenden Gegenstück, die beide miteinander zu verbinden sind und daher in einem ersten Stadium beweglich zueinander sind, während einer Ankopplung die Gefahr einer Relativbewegung besteht Eine Relativbewegung kann beispielsweise durch ein Lösen einer Bremse bei einem Kesselwagen erfolgen, so dass der Kesselwagen sich ein wenig aus seiner Position verschiebt. Bei einem Verladen von einem Schiff kann der jeweilige Wasserstand zu einer Schiffspositionsänderung führen. Oftmals wird diese Gefahr unterschätzt. Jedoch der durch vorbeifahrende Schiffe ausgelöste Wasserstrom führt selbst bei großen Tankschiffen zu Vertikalbewegungen, die bei einer Verankerung beziehungsweise Kai- oder Pontonbefestigung schon ihre Berücksichtigung finden muss. Das Flanschelement funktioniert vorzugsweise nun wie folgt das Gegenstück und der Rohr- oder Schlauchflansch werden in einer Vorposition mittels einer Kopplungseinheit axial weitestgehend fixiert. In Umdrehungsrichtung aber sind der Rohr- oder Schlauchflansch sowie das Gegenstück weiterhin relativ beweglich zueinander und dabei gesichert. Durch diese Sicherung mittels der Kopplungseinheit wird vorzugsweise ein axiales Auseinanderdriften des Rohr- oder Schlauchflansches und des Gegenstücks verhindert. Da es für die Endlagenfixierung darauf ankommt, dass eine Übereinstimmung der Lage von beispielsweise Bohrungen im Rohr- oder Schlauchflansch und im Gegenstück fluchtend zur Anlage kommen, damit Sicherungsbolzen hindurchgesteckt und befestigt werden können, kann diese notwendige fluchtende Ausrichtung von Rohr- oder Schlauchflansch an das Gegenstück beziehungsweise umgekehrt während der Sicherung mittels der Kopplungseinheit erfolgen, ohne dass die Gefahr besteht, dass der Rohr- oder Schlauchflansch und das Gegenstück sich voneinander losreißen können.

Vorzugsweise ist vorgesehen, dass eine Sicherung von Gegenstück und Rohr- oder Schlauchflansch durch die Kopplungseinheit in unmittelbarer Nähe zur Endlagenfixierung erfolgt. Besonders bevorzugt ist es, dass nur noch ein minimaler Spalt beziehungsweise eine Spielpassung als Abstand zur Verfügung steht, um mittels der Befestigungsvorrichtung die letztendlich fluiddichte Endlagenfixierung vollziehen zu können. Die Befestigungsvorrichtung kann beispielsweise eine rein mechanische Verbindung sein. Diese kann beispielsweise über eine oder mehrere Klemmen, die um die Flanschverbindung herum angeordnet sind, erfolgen. Eine Betätigung dieser Klemmen kann händisch wie auch hydraulisch erfolgen. Zusätzlich bevorzugt ist eine Absicherung durch die Befestigungsvorrichtung durch Vorsehen von Bolzensicherungen. Hierzu werden ein oder mehrere Bolzen durch das Flanschelement und das Gegenstück hindurch geführt und durch Muttern gesichert. Neben einer derartigen Bolzensicherung können auch andere Sicherungsmöglichkeiten genutzt werden, die kraft- und/oder formschlüssig ein mögliches Auseinanderreißen der durch die Befestigungsvorrichtung erzielten fluiddichten Endlagenfixierung verhindert. Hierzu können beispielsweise Klammern, Zwingen, Rastungen, bajonettförmige Verriegelungen genutzt werden wie auch Sperr- beziehungsweise Verriegelungskörper, die beispielsweise im Rohr- oder Schlauchflansch beziehungsweise dem Gegenstück angeordnet sind, oder aber zusätzlich als Einzelteile für die fluiddichte Endlagenfixierung eingebracht werden. Eine Ausgestaltung sieht hierbei vor, dass eine automatische Rastung bei Annäherung von Rohr- oder Schlauchflansch und Gegenstück mittels der Kopplungseinheit zur vorläufigen Sicherung von Rohr- oder Schlauchflansch und Gegenstück erfolgt. Die Annäherung von Rohr- oder Schlauchflansch und Gegenstück kann gemäß einer Ausgestaltung axial erfolgen, wobei Rohr- oder Schlauchflansch und Gegenstück zumindest annähernd fluchtend sich nähern. Eine zweite Ausgestaltung sieht vor, dass beispielsweise der Rohr- oder Schlauchflansch und das Gegenstück versetzt zueinander angenähert werden. Dieses kann beispielsweise entlang parallelen Ebenen erfolgen. Ist eine Position erreicht, die einer Annäherung des Rohr- oder Schlauchflansches mit dem Gegenstück vorsieht, kann sodann eine senkrecht zu den parallelen Ebenen ausgeführte Bewegung den Rohr- oder Schlauchflansch mit dem Gegenstück in zumindest annähernd fluchtende Anordnung bringen. Auf diese Weise kann beispielsweise die Kopplungseinheit eine Sicherung durch die Vorgabe einer ersten Annäherung erbringen, die nicht-fluchtend ist, und eine zweite Sicherung, die durch die Bewegung in eine Vorposition und damit fluchtende Anordnung erfolgt. Eine derartige Kopplungseinheit umfasst beispielsweise eine Wegsicherung. Diese Wegsicherung weist ein oder mehrere Führungselement auf, entlang denen der Rohr- oder Schlauchflansch beziehungsweise das Gegenstück bei der Annäherung geführt werden. Diese verhindern, dass bei einer plötzlichen Bewegung ein unkontrolliertes Auseinanderreißen von Rohr- oder Schlauchflansch und Gegenstück erfolgt, wobei eine Verletzung von Personal bestehen könnte.

Vorteilhaft ist es, wenn eine Zentrierungsvorrichtung vorgesehen ist, die bei einem Annähern von Rohr- oder Schlauchflansch und Gegenstück relativ zueinander diese zueinander auch ausrichtet. Beispielsweise kann vorgesehen sein, dass bei einer Annäherung von Rohr- oder Schlauchflansch und Gegenstück diese sich selbst zentrieren. Gemäß einer Ausgestaltung ist vorgesehen, dass die Zentrierungsvorrichtung sich konischförmig verengt. Beispielsweise ist vorgesehen, dass eine Zentrierungsvorrichtung trichterförmig ist, so dass bei einer Relativbewegung zwischen Rohr- oder Schlauchflansch und Gegenstück eine Selbstzentrierung erfolgt. Die Zentrierungsvorrichtung kann ein oder mehrere Elemente aufweisen, entlang deren eine Führung des Rohr- oder Schlauchflansches beziehungsweise des Gegenstückes erfolgt, wenn diese sich relativ zueinander annähern. Vorzugsweise ist die Zentrierungsvorrichtung mit der Kopplungseinheit so verbunden, dass durch die Führung entlang der Zentrierungsvorrichtung eine automatische Vorpositionierung und Sicherung durch die Kopplungseinheit erfolgt. Beispielsweise kann vorgesehen sein, dass die Kopplungseinheit selbstsperrend ist. Dieses kann automatisiert erfolgen, indem bei einer bestimmten Positionierung von Rohr- oder Schlauchflansch und Gegenstück die Kopplungseinheit aktiviert ist. Dadurch kann eine Sperre ausgelöst werden, so dass Rohr- oder Schlauchflansch und Gegenstück zueinander gesichert sind.

Eine weitere Ausgestaltung sieht vor, dass im Falle einer möglichen Losbewegung bei aktivierter Sicherung der Kopplungseinheit die Sicherung nur noch verstärkt wird. Hierzu ist beispielsweise vorgesehen, dass der Rohr- oder Schlauchflansch und das Gegenstück sich selbst mittels der Kopplungseinheit in eine Sicherungsposition hineinziehen, wenn eine Losbewegung von außen auf den Rohr- oder Schlauchflansch beziehungsweise das Gegenstück einwirkt. Eine Ausgestaltung sieht hierfür vor, dass die Kopplungseinheit ein Hebelsystem aufweist, das eine Verriegelung von Gegenstück zu Rohr- oder Schlauchflansch vorsieht. Hierbei kann das Hebelsystem eine Ausgestaltung eines Hebels derart aufweisen, dass dessen Drehachse in Bezug auf einen Sperrriegel ein Hineinziehen in diese Sicherung bedingt, sollte eine Kraft von außen auf das gesicherte System aus Kopplungseinheit, Gegenstück und Rohr- oder Schlauchflansch einwirken. Beispielsweise ist vorgesehen, dass das Hebelsystem mit einer Drehachse eines Rasthebels versehen ist, die senkrecht zu einer Axialausrichtung des Rohr- oder Schlauchflansches angeordnet ist. Eine Weiterbildung sieht vor, dass ein Hebelsystem der Kopplungseinheit federgestützt mit einer Druckfeder ist, die das Hebelsystem an einer Verriegelungsstellung zur Sicherstellung von Gegenstück und Rohr- oder Schlauchflansch hält. Anstelle der Druckfeder kann auch eine sonstige Druckvorrichtung vorgesehen sein, zum Beispiel eine hydraulische Druckvorrichtung. Auch kann anstelle einer Druckfeder eine Zugfeder eingesetzt werden, wenn das System entsprechend anders konzipiert ist. Des Gleichen besteht die Möglichkeit, eine Biegefeder oder eine uhrfederförmige Feder vorsehen zu können. Die Feder kann auch spiralförmig sein. Eine Weiterbildung sieht vor, dass eine Rampe an dem Hebelsystem vorhanden ist, die das Hebelsystem bei einem Gegendruck öffnet, wenn eine Relativbewegung und Annäherung von Rohr- oder Schlauchflansch und Gegenstück erfolgt. Weist der Hebel selbst die Rampe auf, kann dadurch der Hebel aus seiner Ruhelage, die vorzugsweise auch eine Sperrlage ist, durch einen Kontakt mit dem Rohr- oder Schlauchflansch beziehungsweise dem Gegenstück geöffnet werden. Ist dieses soweit verfahren, dass der Bereich der Rampe verlassen worden ist und eine ausreichende Annäherung zur Erzielung der Vorposition erfolgt, kann der Hebel aus der ausgelenkten Position zurück in seine Sperrstellung erfolgen, wobei er vorzugsweise hintergreift. Dieses Hintergreifen sichert den Rohr- oder Schlauchflansch und das Gegenstück aneinander. Vorzugsweise ist hierbei vorgesehen, dass das Hebelsystem mit einer Drehachse eines Rasthebels versehen ist, die senkrecht zu einer Axialausrichtung des Rohroder Schlauchflansches angeordnet ist. Auf diese Weise kann sich die Sicherung in der Vorposition durch die Kopplungseinheit selbsttätig bei Annäherung von Rohr- oder Schlauchflansch und Gegenstück auslösen lassen.

Eine Erhöhung der Sicherheit wird dadurch erzielt, dass eine Schnellschlusssicherung vorgesehen ist, die eine Trennung von Rohrteilen der Verladeeinrichtung und deren Verschließen bewirkt, wenn Kräfte auf das nur durch die Kopplungseinheit aber noch nicht durch die Befestigungsvorrichtung fixierte Flanschelement einwirken. Oftmals ist es notwendig, dass eine Feinpositionierung und insbesondere fluchtende Ausrichtung von Rohroder Schlauchflansch und Gegenstück händisch zu erfolgen hat. Das bedeutet, dass ein Bediener hierfür in unmittelbarer Nähe zu der Flanschverbindung steht, gegebenenfalls auch mit entsprechendem Werkzeug zu hantieren hat. In einem derartigen Moment ist eine Verletzungsgefahr besonders groß, wenn aufgrund von Relativbewegung zwischen einem standortfesten Bereich der Fluid-Verladeeinrichtung und einem bewegbaren Bereich der Fluid-Verladeeinrichtung Kräfte beziehungsweise Momente auftreten, wie sie beispielsweise durch ein Anheben oder Abfallen eines Schiffes verursacht sein können. Würde dieses zu einer abrupten Trennung von Rohr- oder Schlauchflansch und Gegenstück führen, bestände dadurch eine große Verletzungsgefahr des Bedienpersonals. Durch das Vorsehen einer Schnellschlusssicherung kann dieses verhindert werden. Die Schnellschlusssicherung wie auch die Kopplungseinheit sind vorzugsweise so aufeinander ausgerichtet, dass bei vorgebbaren Kräften beziehungsweise Momenten der Rohroder Schlauchflansch und das Gegenstück relativ zueinander gesichert in der Vorposition verbleiben, wohingegen die Schnellschlusssicherung jedoch schon auslöst. Anstelle einer Schnellschlusssicherung kann auch eine Abreißsicherung vorgesehen sein. Während die Schnellschlusssicherung insbesondere auch vorsieht, dass ein Versperren einer Leitung erfolgt, kann die Abreißsicherung ein Trennen der Leitung ausführen, ohne dass aber ein zusätzliches Verschließen der Leitung erfolgt. Eine derartige Vorrichtung ist beispielswelse bei Verladeeinrichtungen möglich, bei denen die Leitung erst dann mit Fluid beladen wird, wenn eine Flanschverbindung zum Be- oder Entladen fluiddicht fixiert ist. In einem derartigen Fall kann jedoch zusätzlich eine Schnellschlusssicherung vorgesehen sein, die jedoch erst zu einem Zeitpunkt auslöst, wenn der Rohr- oder Schlauchflansch mit dem Gegenstück über die Befestigungsvorrichtung sich in der fluiddichten Endlagenfixierung befindet. Eine Anordnung von Kopplungseinheit wie auch von der Befestigungsvorrichtung kann unterschiedlich ausgeführt sein. Gemäß einer Ausgestaltung ist vorgesehen, dass die Kopplungseinheit am Flanschelement angeordnet ist. Eine andere Ausgestaltung sieht vor, dass die Kopplungseinheit am Gegenstück angeordnet ist. Die Befestigungsvorrichtung wiederum kann am Flanschelement und/oder am Gegenstück angeordnet sein. Beispielsweise besteht die Möglichkeit, das eine erste Kopplungseinheit am Flanschelement angeordnet ist und eine zweite Kopplungseinheit am Gegenstück angeordnet ist. Hierdurch kann eine doppelte Sicherung erfolgen. Beispielsweise können die erste und die zweite Kopplungseinheit redundant zueinander sein. Gleiches gilt für die Befestigungsvorrichtung. Es kann eine erste Befestigungsvorrichtung am Flanschelement und eine zweite Befestigungsvorrichtung am Gegenstück angeordnet sein. Auch diese können redundant zueinander sein.

Das Gegenstück kann beispielsweise an einem Schiff, einem Tanklastwagen oder einem Eisenbahnkesselwagen angeordnet sein. Der Rohr- oder Schlauchflansch hingegen ist beispielsweise an einer Land- oder Schiffsverladeeinrichtung angeordnet. Eine umgekehrte Anordnung ist auch möglich. Eine Verladeeinrichtung kann einen oder mehrere Verladearme, Gelenkscheren, Parallelarme oder sonstige Konstruktionen umfassen. Vorzugsweise sind hierbei ein oder mehrere Gelenke vorgesehen, die eine Positionierung und damit ein Aneinanderführen zur Kopplung von Rohr- oder Schlauchflansch und Gegenstück ermöglichen. Das Positionieren von Rohr- oder Schlauchflansch und Gegenstück kann hierbei durch einen Bediener erfolgen, der vorzugsweise auf eine entsprechende elektrische, hydraulische und/oder auf eine sonstige Betätigung, insbesondere fembedienbare Betätigung zurückgreifen kann. Es besteht jedoch ebenfalls die Möglichkeit einer händischen Verbindung der Flansche miteinander.

Gemäß einer Weiterbildung ist vorgesehen, dass eine Mehrzahl an Fluid-Verladeeinrichtungen nebeneinander angeordnet sind, wobei diese den gleichen Aufbau aufweisen und jeweils sämtlich mit einer Kopplungseinheit zusätzlich zu einer Befestigungsvorrichtung im Zusammenspiel mit einem zu be- oder entladenden Speicher sind. Auf diese Weise wird eine Wartung wie auch Reparatur derartiger Fluid-Verladeeinrichtungen vereinfacht, ebenso wie der Betrieb derselben. Durch die gleichen Elemente kann das Bedienpersonal jede Fluid-Verladeeinrichtung gleich betätigen und muss sich somit nicht auf unterschiedliche Elemente einstellen.

Des Weiteren kann das vorgeschlagene Flanschelement mit Kopplungseinheit auch bei so genannten geschlossenen Systemen von Fluid-Verladeeinrichtungen vorgesehen werden. Ein geschlossenes System umfasst die Möglichkeit, neben der Leitung des Fluides auch Dämpfe, die zusätzlich zum Fluid vorhanden sind oder entstehen, ableiten zu können. Diese können beispielsweise über eine Gasrückführung unabhängig von der eigentlichen Fluidleitung beispielsweise zu einem Tank zurückgeführt werden.

Eine Weiterbildung sieht vor, dass das Flanschelement der Fluid-Verladeeinrichtung mit einer Tragkonstruktion gekoppelt ist. Beispielsweise ist die Fluid-Verladeeinrichtung derart konstruiert, dass zum einen eine Tragkonstruktion vorhanden ist, mittels der die Fluid-Verladeeinrichtung in ihre jeweilige Stellung ausbalanciert gebracht werden kann, beispielsweise durch ein oder mehrere Kontergewichte zur Ausbalancierung, durch entsprechenden Momentenausgleich eines Innen- und Außenarms beispielsweise in Form eines Pantografsystems oder in sonstiger Weise. Davon abgetrennt aber mit der Tragkonstruktion verbunden ist die eigentliche Produktleitung. Die Kopplungseinheit kann nun durch die Tragkonstruktion abgestützt werden und hierüber die notwendige Festigkeit und Stabilität erfahren, die zur Aufnahme von Kräften und Momenten notwendig ist, um die Sicherung von Gegenstück und Rohr- oder Schlauchflansch ermöglichen zu können. Wird beispielsweise eine Fluid-Verladeeinrichtung genutzt, mittels der neben einer Produktleitung auch eine Gaspendelleitung vorgesehen ist, können beide jeweils in Bezug auf ihren jeweiligen Rohr- oder Schlauchflansch mit einer Kopplungseinheit unabhängig voneinander ausgestattet und damit mit ihrem jeweiligen Gegenstück in einer Vorposition gesichert werden.

Die Kopplungseinheit kann im Übrigen auch als ein Nachrüstteil an eine schon vorhandene Fluid-Verladeeinrichtung angebracht werden. Hierzu kann die Kopplungseinheit unterschiedlich ausgelegt werden, je nachdem, wie die Fluid-Verladeeinrichtung ausgestattet ist. Dieses umfasst beispielsweise die Möglichkeit, zwischen verschiedenen Sicherungsmitteln, wie oben beschrieben, und deren Anzahl und Verteilung auswählen zu können. Zum anderen kann die Kopplungseinheit auch einen oder mehrere Sensoren aufweisen, mittels derer eine Annäherung von Rohr- oder Schlauchflansch und Gegenstück wie auch eine Sicherung detektiert werden können.

Die über die Kopplungseinheit transportierbaren Fluide können gasförmig, flüssig oder in sonstiger Konsistenz sein, z.B. eine newtonische oder auch eine nicht-newtonische Flüssigkeit oder zähfließende Masse sein, beispielsweise ein Gemenge aus Flüssigkeit und Feststoff. Darüber hinaus können auch schüttgutfähige Güter über die Kopplungseinheit umgeschlagen werden, so zum Beispiel rieselfähige Produkte, insbesondere Pulver, beispielsweise Kohlenstaub, Getreide, Zucker oder sonstige Nahrungsmittel. Auch andere Feststoffe wie beispielsweise Mais können über die Kopplungseinheit transportiert werden. Insbesondere hierbei aber auch in anderen Anwendungen weist die Kopplungseinheit selbst direkt oder indirekt eine Erdung auf, insbesondere Maßnahmen, die eine elektrostatische Aufladung der Kopplungseinheit verhindern. Beispielsweise kann vorgesehen sein, dass voneinander trennbare Elemente der Kopplungseinheit jeweils an eine Erdung angeschlossen sind. Dadurch wird das Entstehen von Spannungspotentialen vermieden.

Weitere vorteilhafte Ausgestaltungen und Weiterbildungen werden anhand der folgenden Zeichnungen näher erläutert. Die aus den Figuren hervorgehenden einzelnen Merkmale sind jedoch nicht auf diese beschränkt. Vielmehr dienen diese nur als beispielhafte Erläuterung und können mit anderen Merkmalen aus anderen Figuren beziehungsweise aus der obigen Beschreibung zu zusätzlichen Ausgestaltungen verknüpft werden. Es zeigen:
- Fig. 1 bis Fig. 4: das Zusammenspiel von Rohr- oder Schlauchflansch mit einem Gegenstück,
- Fig. 5: eine weitere Ausgestaltung einer Verbindung von Rohr- oder Schlauchflansch und Gegenstück,
- Fig. 6: eine Aufsicht auf den Ausschnitt aus Fig. 5, und
- Fig. 7: eine Übersichtsdarstellung einer bevorzugten Anwendung an einem Fluidverladearm.

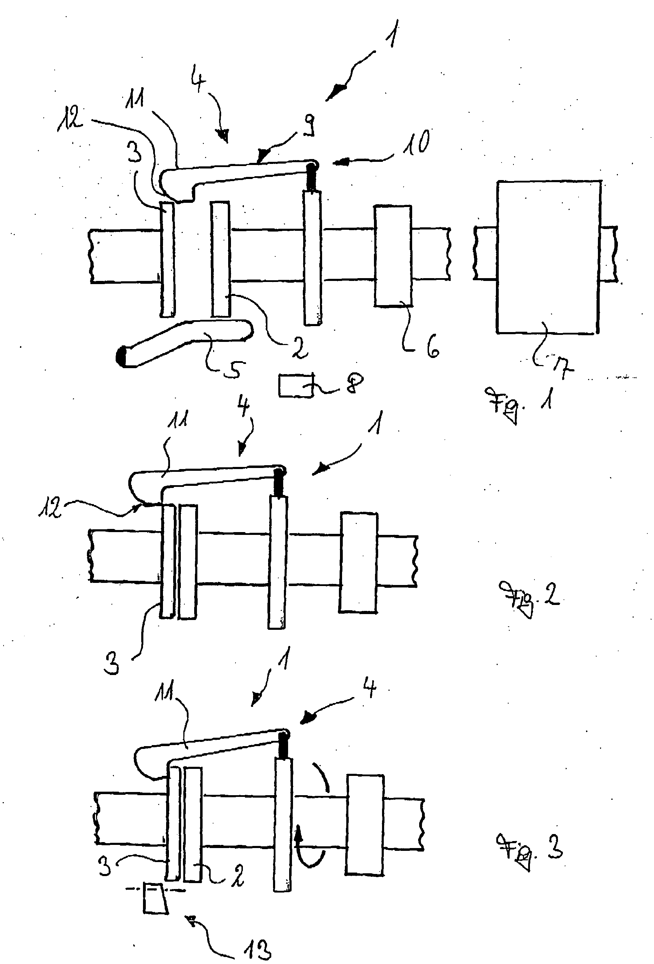

Fig. 1 zeigt in beispielhafter Ausgestaltung ein Flanschelement 1 in stark vereinfachter schematischer Ansicht. Das Flanschelement 1 weist einen Rohr- oder Schlauchflansch 2 auf. Diesem gegenüber angeordnet ist ein Gegenstück 3. Hierbei handelt es sich ebenfalls vorzugsweise um einen Flansch, vorzugsweise um einen Anschlussstutzen mit Flansch, der mit einem Schiff, einem Kesselwagen und/oder einer anderen Art von Speicher für ein Fluid vorzugsweise verbunden ist. Des Weiteren ist eine Kopplungseinheit 4 in vereinfachter Darstellungsform vorhanden. Diese ist in diesem Falle an dem Flanschelement 1 angeordnet und ist in Verbindung mit dem Rohr- oder Schlauchflansch 2. Des Weiteren ist eine Zentrierungsvorrichtung 5 vorgesehen, mittels der das Gegenstück 3 besser eingefangen werden kann. Gemäß der hier dargestellten Ausgestaltung wird das Flanschelement 1 auf das Gegenstück 3 zubewegt. Das bedeutet, dass die Zentrierungsvorrichtung 5 letztendlich eine Ausrichtung des Flanschelementes 1 in Bezug auf das feststehende Gegenstück 3 bewirkt. Es besteht jedoch ebenfalls die Möglichkeit, dass an dem Gegenstück 3 eine Zentrierungsvorrichtung 5 angeordnet ist. Auch können an beiden, das heißt am Gegenstück 3 wie auch am Flanschelement 1 jeweils entsprechende Zentrierungsvorrichtungen vorgesehen sein. Sie können beispielsweise auch miteinander fluchtend zusammenwirken. Das Flanschelement 1 ist des Weiteren mit einem Drehgelenk 6 verbunden. Das Drehgelenk 6 ermöglicht, dass zumindest ein Teil des Flanschelements 1 sich drehen lässt. Eine Drehung ist insbesondere relativ zum Gegenstück 3 ausführbar. Des Weiteren ist mit dem Flanschelement 1 eine Sicherheitskupplung 7 verbunden. Die Sicherheitskupplung 7 ermöglicht eine Trennung des Flanschelementes 1, sofern Kräfte auf diesen einwirken und eine Sicherung zwischen dem Rohr- und Schlauchflansch 2 und dem Gegenstück 3 schon durch die Kopplungseinheit 4 erfolgt ist. So wie dargestellt, ist jedoch die Annäherung von Flanschelement 1 an das Gegenstück 3 im Gange. Eine derartige Annäherung kann beispielsweise kameraüberwacht sein. Beispielsweise ist hierfür eine CCD-Kamera 8 vorgesehen, Ober die ein Bediener einen Annäherungsvorgang des Flanschelementes 1 an das Gegenstück 3 beobachten kann. Vorzugsweise ist die CCD-Kamera 8 so angeordnet, dass die Zentrierungsvorrichtung 5, aber auch die Kopplungseinheit 4 im Blickbereich sind. Von der Zentrierungsvorrichtung 5 ist nur ein Teil dargestellt Vorzugsweise sind verschiedene konisch geformte Arme vorhanden, die eine Zentrierung beim Einfangen des Gegenstücks 3 bewirken. Nähert sich das Flanschelement 1 Ober eine entsprechende Betätigungsvorrichtung dem Gegenstück 3, wird eine Fangvorrichtung 9 der Kopplungseinheit 4 aktiviert. Die Kopplungseinheit 4 weist hierfür ein Hebelsystem 10 auf. Das Hebelsystem 10 hat einen Rasthebel 11, der mit einer Rampe 12 versehen ist. Durch eine Annäherung des Gegenstückes 3 trifft die Rampe 12 auf das Gegenstück 3 und wird dadurch angehoben.

Fig. 2 zeigt einen Zustand einer weiteren Annäherung des Flanschelementes 1 an das Gegenstück 3. Durch die Rampe 12 ist der Rasthebel 11 angehoben. Dadurch kann das Gegenstück 3 unter dem Rasthebel entlang gleiten. Die Zentrierungsvorrichtung ist zwar nicht dargestellt. Sie ist jedoch so ausgelegt, dass eine Selbstzentrierung bis zum Erreichen einer Einrastung durch die Kopplungseinheit 4 erfolgt.

Fig. 3 zeigt das Flanschelement 1 und das Gegenstück 3 in einer Vorposition, bei der die Kopplungseinheit 4 eine Sicherung zwischen dem Gegenstück 3 und dem Rohr- oder Schlauchflansch 2 vorgenommen hat Der Rasthebel 11 verhindert, dass das Gegenstück 3 und der Rohr- oder Schlauchflansch 2 sich axial trennen können. Gleichzeitig ist diese Sicherung derart, dass eine Verdrehung des Rohr- oder Schlauchflansches 2 relativ zum Gegenstück 3 noch möglich ist. Die fluchtende Anordnung bleibt hierbei erhalten. Allerdings kann eine Feinpositionierung durch Verdrehung ausgeführt werden, damit eine Befestigungsvorrichtung 13, die nur schematisch angedeutet ist, zum Einsatz kommen kann. Die Sicherung in der Vorposition erfolgt somit in unmittelbarer Nähe zur späteren Endlagenfixierung.

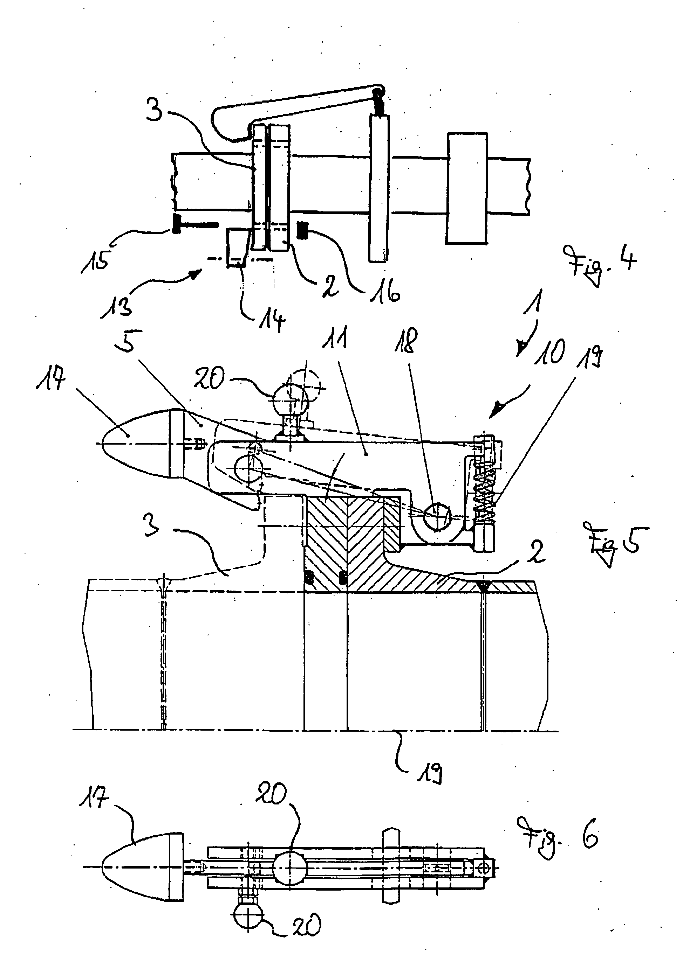

Fig. 4 zeigt eine aktivierte Befestigungsvorrichtung 13. Hierbei erfolgt ein Verklemmen von Rohr- oder Schlauchflansch 2 und Gegenstück 3. Eine Klemmvorrichtung 14 kann hierzu beispielsweise händisch oder auch hydraulisch betätigt werden. Die hier dargestellte Ausgestaltungsform sieht ein Verdrehen der Klemmvorrichtung 14 vor. Aufgrund einer kegelförmigen Oberfläche auf einer Seite der Klemmvorrichtung 14 wird beim Verdrehen das Gegenstück 3 mit dem Rohr- oder Schlauchflansch 2 verpresst. Die Klemmvorrichtung 14 weist vorzugsweise eine Abstützung am Flanschelement 1 auf. Dadurch kann die eingeleitete Kraft sich auf das Gegenstück 3 und den Rohr- oder Schlauchflansch 2 aufprägen. Vor einer Betätigung der Klemmvorrichtung 14 erfolgt vorzugsweise die Feinpositionierung. Die Feinpositionierung ermöglicht ein beispielsweise fluchtendes Anordnen von Bohrungen im Rohr- oder Schlauchflansch 2 beziehungsweise Gegenstück 3. Diese sind gestrichelt angedeutet. Durch die fluchtende Anordnung ist es möglich, eine Bolzenverbindung zur Sicherung zu nutzen. Dargestellt ist schematisch der Bolzen 15 und eine Mutter 16 der Bolzenverbindung. Die Klemmvorrichtung 14 wiederum ist in der Lage, dafür Sorge zu tragen, dass die Bolzenverbindung sicher vorgenommen werden kann. Die Bolzenverbindung ist optional. Anstelle dieser können auch andere Sicherungsmittel eingesetzt werden. Sie kann jedoch auch entfallen, beispielsweise insbesondere dann, wenn eine hydraulische Klemmvorrichtung als Befestigungsvorrichtung 13 genutzt wird.

Fig. 5 zeigt eine weitere Ausgestaltung eines Flanschelementes 1 mit einem Rasthebel 11. Hierbei ist der Rasthebel 11 an dem Rohr- oder Schlauchflansch 2 direkt befestigt. Darüber hinaus ist der Rasthebel 11 auch mit einem Element der Zentrierungsvorrichtung 5 im Zusammenspiel, wie dieses nachfolgend noch anhand von Fig. 6 näher erläutert wird. Die Zentrierungsvorrichtung 5 weist im Übrigen einen Puffer 17 auf. Dieser kann beispielsweise auswechselbar an der Zentrierungsvorrichtung 5 angeordnet sein. Auf diese Weise kann ein beschädigter Puffer ausgetauscht werden, ohne dass die Zentrierungsvorrichtung selbst, die vorzugsweise ebenfalls am Rohr- oder Schlauchflansch 2 direkt ansitzt, auszutauschen wäre. Gemäß der dargestellten Ausführung sind der Rasthebel 11 wie auch das Element der Zentrierungsvorrichtung 5 über einen Drehbolzen 18 miteinander gekoppelt. Eine Drehachse verläuft hierbei senkrecht zu einer Achse 19 des Rohr- oder Schlauchflansches 2 beziehungsweise des Gegenstücks 3. Die Drehachse ist auch unterhalb eines maximalen Flanschaußendurchmessers angeordnet. Der Rasthebel 11 weist vorzugsweise eine Form auf, bei der er auf dem Rohr- oder Schlauchflansch 2 aufliegt, während in Bezug auf das Gegenstück 3 Spiel verbleibt. Trotzdem ist eine Vorposition durch die Form des Rasthebels 11 gesichert. Des Weiteren weist das Hebelsystem 10 eine Druckfeder 19 auf. Die Druckfeder bewirkt, dass der Rasthebel 11 nur gegen einen Widerstand durch das Gegenstück 3, das gestrichelt eingezeichnet ist, beim Positionieren in die Vorposition angehoben und schließlich einrasten kann. Insbesondere sorgt die Druckfeder 19 dafür, dass die Sicherung durch Aktivierung des Rasthebels 11 in ihrer Position verbleibt. Die Verriegelungsstellung des Rasthebels 11 ist somit gleichzeitig seine Ruhestellung wie auch Aktivstellung. Bei der hier dargestellten Form kann der Rasthebel 11 durch manuelle Betätigung über einen Griff 20 angehoben werden. Dieses ist gestrichelt angedeutet. Der Griff 20 kann oben und/oder seitlich angeordnet sein, was ebenfalls angedeutet dargestellt ist. Eine andere Betätigung ist ebenfalls möglich, zum Beispiel hydraulisch, mechanisch und/oder elektrisch. Durch die Nasenform des Rasthebels wird im Übrigen erreicht, dass bei einem Versuch des Gegenstücks 3 aus der Vorposition herauszugelangen, die Rastung umso sicherer wird. Die Nasenform bewirkt hierbei ein Hineinziehen des Gegenstücks 3 in die dadurch geschaffene Sicherung.

Fig. 6 zeigt die Ausgestaltung aus Fig. 5 in einer Aufsicht. Hierbei ist die Positionierung des Griffs an einer Seite ebenfalls zu erkennen. Darüber hinaus wird dargestellt, dass der Rasthebel 11 über das Element der Zentrierungsvorrichtung 5 greift und dieses einbettet. Der Rasthebel 11 weist daher zwei benachbarte Wangen auf, in deren Mitte sich ein Element der Zentrierungsvorrichtung 5 befindet Auf diese Weise wird vermieden, dass Querkräfte aufgrund der Rastfunktion auftreten. Zum anderen dient der Puffer 17 somit gleichzeitig auch als Schutz für die Kopplungseinheit 4 und verhindert nicht nur eine Beschädigung des Gegenstücks 3 bei Annäherung durch das Flanschelements 1. Insbesondere weist der Puffer 17 eine derartige Breite auf, so dass die Kopplungseinheit 4 dahinter abgedeckt ist. Dieses kann auch die Griffe 20 umfassen, ist jedoch nicht notwendig, so wie dargestellt. Neben einer händischen Entsicherung über die Griffe 20 besteht des Weiteren die Möglichkeit, durch eine Verstellvorrichtung, die jedoch nicht näher dargestellt ist, die Kopplungseinheit 4 zu öffnen. Dies kann beispielsweise elektrisch, hydraulisch oder auch mechanisch erfolgen.

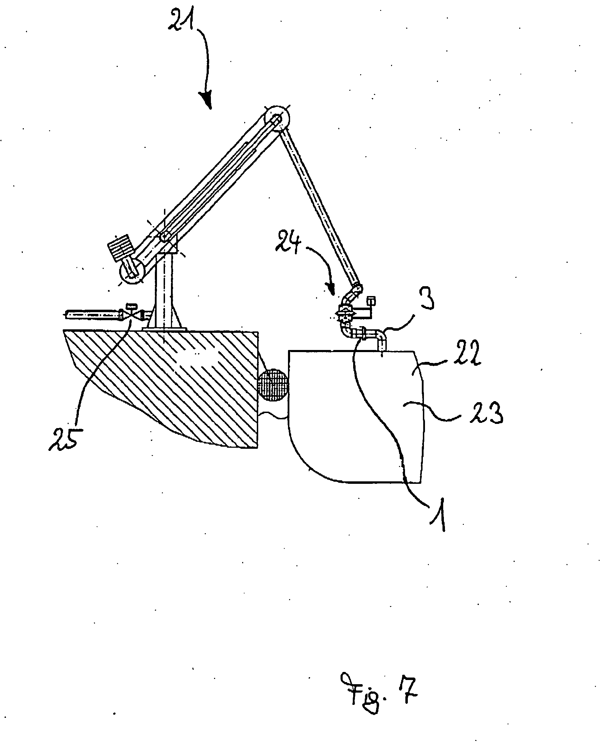

Fig. 7 zeigt eine schematische Ansicht am Beispiel einer Fluid-Verladeeinrichtung 21. Die Fluid-Verladeeinrichtung 21 ist landgestützt, dient aber zur Be- beziehungsweise Entladung von Schiffen. Dargestellt ist ein Ausschnitt eines Tankschiffes 22 mit einem im Inneren angeordneten Speicher 23. Das Schiff weist mehrere Gegenstücke 3 auf, wobei hier nur eines dargestellt ist. So können mehrere nebeneinander angeordnete Fluid-Verladeeinrichtungen gleichzeitig das Tankschiff 22 ent- beziehungsweise beladen. Dargestellt ist eine schon vorhandene Verbindung mit dem Flanschelement 1. Das Schiff ist gesichert an einer Kaimauer. Die Fluid-Verladeeinrichtung 21 weist eine Schnellschlusssicherung 24 auf. Wie hieraus zu entnehmen ist, wird bei einer zu großen Abweichung zwischen der Ruheposition des Tankschiffes 22 und einer beispielsweise durch zu- oder abströmendes Wasser entstandenen Abweichposition die Schnellschlusssicherung 24 ausgelöst. Dadurch wird zum einen ein Teil der Fluid-Verladeeinrichtung 21 mit dem Flanschelement 1 vom übrigen Teil der Fluid-Verladeeinrichtung 21 abgetrennt. Gleichzeitig wird hierbei zweiseitig die fluidführende Leitung verschlossen. Die Fluid-Verladeeinrichtung 21 weist selbst auch ein Hauptventil 25 auf, mittels dem die fluidführende Leitung zusätzlich abgesperrt werden kann. Somit sind bei der dargestellten beispielhaften Fluid-Verladeeinrichtung 21 verschiedenste Sicherheitssysteme vorhanden, mittels denen ein sicheres Be- und Entladen von unterschiedlichsten Fluiden, gasförmig wie auch flüssig, möglich ist. Im Übrigen wird darauf verwiesen, dass die Möglichkeit besteht, wenn eine Kopplungseinheit ein Flanschelement 1 mit einem Gegenstück 3 in einer Vorposition sichert, dass sodann die Schnellschlusssicherung 24 zuerst anspricht und eine Trennung bewirkt, bevor die Kopplungseinheit 4 das Flanschelement 1 wieder loslassen würde. Allerdings kann insbesondere bei ferngesteuertem Koppeln von Flanschelement 1 und Gegenstück 3 auch vorgesehen sein, dass die Schnellschlusssicherung 24 nicht anspricht, sondern bei entsprechender Relativbewegung zwischen beispielsweise Tankschiff 22 und Ftuid-Veriadeeinrichtung 21 die Kopplungseinheit 4 das Flanschelement 1 vom Gegenstück 3 wieder trennt.

## Patentansprüche

1. Flanschelement (1) einer Flüssiggas-Verladeeinrichtung (21) zur Übertragung von Flüssiggas, wobei das Flanschelement (1) einen umlaufenden Rohr- oder Schlauchflansch (2) aufweist, der an einem Gegenstück (3) fluiddicht befestigbar ist und das Flanschelement (1) und das Gegenstück (3) relativ zueinander beweglich sind, und das Flanschelement (1) eine Befestigungsvorrichtung (13) mit einer Klemmvorrichtung (14) aufweist, wobei die aktivierte Befestigungsvorrichtung (13) ein Verklemmen von Rohr - oder Schlauchflansch (2) und Gegenstück (3) bewirkt, und die Befestigungsvorrichtung (13) zur fluiddichten Endlagenfixierung des Rohr- oder Schlauchflansches (2) mit dem Gegenstück (3) vorgesehen ist; und eine von der Befestigungsvorrichtung (13) separate Kopplungseinheit (4) mit einem Rasthebel (11) vorhanden ist, wobei durch eine Einrastung der Kopplungseinheit (4) mit dem Rasthebel (11) eine Sicherung des Gegenstücks (3) und des Rohr- oder Schlauchflansches (2) in einer Vorposition zum Feinpositionieren erfolgt, wobei eine Feinpositionierung durch Verdrehung des Rohr- oder Schlauchflansches (2) relativ zum Gegenstück (3) noch möglich ist, bevor mittels der Befestigungsvorrichtung (13) die fluiddichte Endlagenfixierung erfolgt.

2. Flanschelement (1) nach Anspruch 1, **dadurch gekennzeichnet, dass** die Kopplungseinheit (4) ein axiales Auseinanderdriften des Rohr- oder Schlauchflansches (2) und des Gegenstücks (3) verhindert, wobei eine Sicherung von Gegenstück (3) und Rohr- oder Schlauchflansch (2) durch die Kopplungseinheit (4) diese relativ zueinander in unmittelbarer Nähe zur Endlagenfixierung anordnet, und eine Zentrierungsvorrichtung (5) vorgesehen ist, die bei einem Annähern von Rohr- oder Schlauchflansch (2) und Gegenstück (3) relativ zueinander diese zueinander ausrichtet, wobei die Zentrierungsvorrichtung (5) sich konischförmig verengt.

3. Flanschelement (1) nach einem der vorhergehenden Ansprüche, **dadurch gekennzeichnet, dass** die Kopplungseinheit (4) eine Fangvorrichtung hat, mittels der der Rohr- oder Schlauchflansch (2) und das Gegenstück (3) relativ zueinander gesichert werden, wobei die Kopplungseinheit (4) eine relative Drehbewegung von Gegenstück (3) zu Rohr- oder Schlauchflansch (2) ermöglicht.

4. Flanschelement (1) nach einem der vorhergehenden Ansprüche, **dadurch gekennzeichnet, dass** die Kopplungseinheit (4) selbstsperrend ist.

5. Flanschelement (1) nach Anspruch 4, **dadurch gekennzeichnet, dass** der Rohr- oder Schlauchflansch (2) und das Gegenstück (3) sich selbst mittels der Kopplungseinheit (4) in eine Sicherungsposition hineinziehen, wenn eine Losbewegung bei aktivierter Sicherung durch die Kopplungseinheit erfolgt.

6. Flanschelement (1) nach einem der vorhergehenden Ansprüche, **dadurch gekennzeichnet, dass** die Kopplungseinheit (4) ein Hebelsystem (10) aufweist, dass eine Verriegelung von Gegenstück (3) zu Rohr- oder Schlauchflansch (2) vorsieht, wobei das Hebel-system (10) der Kopplungseinheit (4) federgestützt mit einer Druckfeder(19) ist, die das Hebelsystem (10) in einer Verriegelungsstellung zur Sicherung von Gegenstück (3) und Rohr- oder Schlauchflansch (2) hält, und wobei eine Rampe (12) an dem Hebelsystem (10) vorhanden ist, die sich bei einem Gegendruck öffnet, wenn eine Relativbewegung und Annäherung von Rohr- oder Schlauchflansch (2) und Gegenstück (3) erfolgt.

7. Flanschelement (1) nach Anspruch 6, **dadurch gekennzeichnet, dass** das Hebelsystem (10) mit einer Drehachse eines Rasthebels (11) versehen ist, die senkrecht zu einer Axialausrichtung des Rohr- oder Schlauchflansches (2) angeordnet ist.

8. Flanschelement (1) nach einem der vorhergehenden Ansprüche, **dadurch gekennzeichnet, dass** eine Schnellschlusssicherung (24) vorgesehen ist, die eine Trennung von Rohrteilen der Fluid-Verladeelnrichtung (21) und deren Verschließen bewirkt, wenn Kräfte auf das nur durch die Kopplungseinheit (4) aber noch nicht durch die Befestigungsvorrichtung (13) endlagenfixierte Flanschelement (1) einwirken.

9. Flanschelement (1) nach einem der vorhergehenden Ansprüche, **dadurch gekennzeichnet, dass** die Befestigungsvorrichtung (13) eine hydraulische Betätigung und/oder dass die Befestigungsvorrichtung (13) eine händisch zu betätigende Feststellung aufweist.

10. Flanschelement (1) nach einem der vorhergehenden Ansprüche, **dadurch gekennzeichnet, dass** die Kopplungseinheit (4) ein Nachrüstteil ist.

11. Verfahren zur dichtenden Verbindung einer Flanschverbindung einer FlüssiggasVerladeeinrichtung (21) mit einem Flanschelement gemäß Anspruch 1 und einer Anbindung an einen Speicher zur Be- oder Entladung von Flüssiggas, wobei ein Rohr- oder Schlauchflansch (2) und ein Gegenstück (3) zur Bildung der Flanschverbindung miteinander verbunden werden, wobei das Gegenstück (3) und der Rohr- oder Schlauchflansch (2) in einer Vorposition mittels einer Einrastung einer Kopplungseinheit (4) mit einem Rasthebel (11) axial weitestgehend fixiert aber in Umdrehungsrichtung weiterhin relativ beweglich zueinander gesichert werden, wobei eine Feinpositionierung durch Verdrehung des Rohr- oder Schlauchflansches (2) relativ zum Gegenstück ermöglicht_wird, bevor mittels einer von der Kopplungseinheit separierten Befestigungsvorrichtung (13) mit einer Klemmvorrichtung_eine Endlagenpositionierung von Rohr- oder Schlauchflansch (2) und Gegenstück (3) erfolgt und eine fluiddichte Verbindung geschaffen wird, wobei eine Aktivierung der Klemmvorrichtung ein Verpressen des Gegenstückes (3) mit dem Rohr- oder Schlauchflansch (2) bewirkt.

12. Verfahren nach Anspruch 11, **dadurch gekennzeichnet, dass** eine automatische Rastung bei Annäherung von Rohr- oder Schlauchflansch (2) und Gegenstück (3) mittels der Kopplungseinheit (4) zur vorläufigen Sicherung von Rohr- oder Schlauchflansch (2) und Gegenstück (3) erfolgt, wobei bei Annäherung von Rohr- oder Schlauchflansch (2) und Gegenstück (3) diese sich selbst zentrieren.

13. Verfahren nach einem der vorhergehenden Ansprüche, **dadurch gekennzeichnet, dass** in einem Zustand, bei dem die Kopplungseinheit (4) aktiv worden ist, die Befestigungsvorrichtung (13) jedoch noch nicht betätigt wurde, bei einem Störfall eine Sicherheitskupplung für eine Trennung der Verbindung sorgt.

14. Verfahren nach einem der vorhergehenden Ansprüche, **dadurch gekennzeichnet, dass** ein automatisiertes Annähern von Rohr- oder Schlauchflansch (2) und Gegenstück (3) erfolgt.

15. Verwendung einer Kopplungseinheit (4) gemäß einer der vorhergehenden Ansprüche zur Nachrüstung bei Flanschverbindungen von Fluid-Verladeeinrichtungen (21).

## Claims

1. A flange element (1) of a liquefied gas loading device (21) for the transfer of liquefied gas, wherein the flange element (1) has a continuous tube or hose flange (2) which is capable of being fastened to a counter member (3) In a fluid-tight manner, and the flange element (1) and the counter member (3) are movable relative to each other, and the flange element (1) has a fastening apparatus (13) with a clamping apparatus (14), wherein the activated fastening apparatus (13) causes a clamping of the tube or hose flange (2) and the counter member (3), and the fastening apparatus (13) is provided for the fluid-tight fixing of the end position of the tube or hose flange (2) to the counter member (3), and a coupling unit (4) separate from the fastening apparatus (13) and having a catch lever (11) Is present, wherein by means of an engagement of the coupling unit (4) with the catch lever (11) the counter member (3) and the tube or hose flange (2) are secured In a preliminary position for fine positioning, wherein a fine positioning is still possible by rotation of the tube or hose flange (2) relative to the counter member (3) before the fluid-tight fixing of the end position is carried out by means of the fastening apparatus (13).

2. A flange element (1) according to Claim 1, **characterized in that** the coupling unit (4) prevents an axial drifting apart of the tube or hose flange (2) and the counter member (3), wherein a securing of the counter member (3) and the tube or hose flange (2) by the coupling unit (4) arranges the latter relative to each other In the immediate vicinity of the fixing of the end position, and a centring apparatus (5) is provided which, as the tube or hose flange (2) and the counter member (3) draw near relative to each other, orientates them with respect to each other, wherein the centring apparatus (5) narrows In a conical manner.

3. A flange element (1) according to one of the preceding Claims, **characterized in that** the coupling unit (4) has a catching apparatus by means of which the tube or hose flange (2) and the counter member (3) are secured relative to each other, wherein the coupling unit (4) permits a rotational movement of the counter member (3) relative to the tube or hose flange (2).

4. A flange element (1) according to any one of the preceding Claims, **characterized in that** the coupling unit (4) is self-locking.

5. A flange element (1) according to Claim 4, **characterized in that** the tube or hose flange (2) and the counter member (3) are pulled into a securing position by means of the coupling unit (4) when a releasing movement is carried out by the coupling unit as the securing is activated.

6. A flange element (1) according to any one of the preceding Claims, **characterized in that** the coupling unit (4) has a lever system (10) which provides a locking of the counter member (3) with respect to the tube or hose flange (2), wherein the lever system (10) of the coupling unit (4) is supported by a compression spring (19) which holds the lever system (10) In a locking position in order to secure the counter member (3) and the tube or hose flange (2), and wherein a ramp (12), which opens under a counter pressure when a relative movement and a drawing near of the tube or hose flange (2) and the counter member (3) take place, is present on the lever system (10).

7. A flange element (1) according to Claim 6, **characterized in that** the lever system (10) is provided with an axis of rotation of a catch lever (11), which is arranged at a right angle to an axial orientation of the tube or hose flange (2).

8. A flange element (1) according to any one of the preceding Claims, **characterized In that** a quick-action securing means (24) is provided which causes a separation of tube parts of the fluid loading device (21) and the closure thereof If forces act upon the flange element (1) which is fixed in the end position only by the coupling unit (4) but not yet by the fastening apparatus (13).

9. A flange element (1) according to any one of the preceding Claims, **characterized in that** the fastening apparatus (13) has an hydraulic actuation and/or the fastening apparatus (13) has a fixing means to be actuated manually.

10. A flange element (1) according to any one of the preceding Claims, **characterized In that** the coupling unit (4) is a retrofitting part.

11. A method of connecting in a sealed manner a flange connection of a liquefied gas loading device (21) with a flange element according to Claim 1 and an attachment to a reservoir for the loading or unloading of liquefied gas, wherein a tube or hose flange (2) and a counter member (3) are connected to each other to form the flange connection, wherein the counter member (3) and the tube or hose flange (2) are secured in a manner fixed axially as far as possible in a preliminary position by means of an engagement of a coupling unit (4) with a catch lever (11) but also movable relative to each other in the direction of rotation, wherein a fine positioning is made possible by rotation of the tube or hose flange (2) relative to the counter member, before a positioning of the end position of the tube or hose flange (2) and the counter member (3) is carried out by means of a fastening apparatus (13) separated from the coupling unit and having a clamping apparatus, and a fluid-tight connection is formed, wherein an activation of the clamping apparatus causes a pressing of the counter member (3) with the tube or hose flange (2).

12. A method according to Claim 11, **characterized in that** an automatic catching is carried out as the tube or hose flange (2) and the counter member (3) draw near by means of the coupling unit (4) for the preliminary securing of the tube or hose flange (2) and the counter member (3), wherein as the tube or hose flange (2) and the counter member (3) draw near they centre themselves.

13. A method according to any one of the preceding Claims, **characterized in that** In a state in which the coupling unit (4) has become active the fastening apparatus (13) has not yet been actuated, in the event of a breakdown a securing coupling ensures that the connection is separated.

14. A method according to any one of the preceding Claims, **characterized in that** an automated drawing near of the tube or hose flange (2) and the counter member (3) takes place.

15. Use of a coupling unit (4) according to any one of the preceding Claims for the retrofitting of flange connections of fluid loading devices (21).

## Revendications

1. Élément de raccordement (1) d'un dispositif de chargement de gaz liquéfié (21) pour le transport de gaz liquéfié, ledit élément de raccordement (1) comportant une bride (2) rotative pour tube ou tuyau flexible, laquelle est destinée à être fixée de manière étanche aux fluides sur une partie conjuguée (3), et l'élément de raccordement (1) et la partie conjuguée (3) sont mobiles l'un par rapport à l'autre, et l'élément de raccordement (1) comporte un dispositif de fixation (13) avec un dispositif de serrage (14), le dispositif de fixation (13) activé induisant un serrage entre la bride (2) pour tube ou tuyau flexible et la partie conjuguée (3), et le dispositif de fixation (13) est prévu pour fixer la bride (2) pour tube ou tuyau flexible de manière étanche aux fluides dans sa position finale avec la partie conjuguée (3), et il est prévu une unité de couplage (4), séparée du dispositif de fixation (13) et munie d'un levier de blocage (11), une immobilisation de la partie conjuguée (3) et de la bride (2) pour tube ou tuyau flexible dans une position préliminaire en vue d'un positionnement précis se produisant sous l'effet d'un enclenchement de l'unité de couplage (4) avec le levier de blocage (11), un positionnement précis étant encore possible par une rotation de la bride (2) pour tube ou tuyau flexible par rapport à la partie conjuguée (3), avant la fixation étanche aux fluides dans la position finale au moyen du dispositif de fixation (13).

2. Élément de raccordement (1) selon la revendication 1, **caractérisé en ce que** l'unité de couplage (4) empêche un glissement de la bride (2) pour tube ou tuyau flexible et de la partie conjuguée (3) l'une hors de l'autre, par une Immobilisation de la partie conjuguée (3) et de la bride (2) pour tube ou tuyau flexible par l'unité de couplage (4), ces pièces étant agencées l'une par rapport à l'autre à proximité immédiate de la position de fixation finale, et il est prévu un dispositif de centrage (5) qui aligne l'une par rapport à l'autre la bride (2) pour tube ou tuyau flexible et la partie conjuguée (3) au moment du rapprochement de celles-ci, ledit dispositif de centrage (5) se rétrécissant de manière conique.

3. Élément de raccordement (1) selon l'une quelconque des revendications précédentes, **caractérisé en ce que** l'unité de couplage (4) a un dispositif d'arrêt, au moyen duquel la bride (2) pour tube ou tuyau flexible et la partie conjuguée (3) sont Immobilisées l'une par rapport à l'autre, l'unité de couplage (4) permettant un mouvement de rotation relatif de la partie conjuguée (3) par rapport à la bride (2) pour tube ou tuyau flexible.

4. Élément de raccordement (1) selon l'une quelconque des revendications précédentes, **caractérisé en ce que** l'unité de couplage (4) se verrouille automatiquement.

5. Élément de raccordement (1) selon la revendication 4, **caractérisé en ce que** la bride (2) pour tube ou tuyau flexible et la partie conjuguée (3) se tirent elles-mêmes l'une dans l'autre dans une position d'immobilisation au moyen de l'unité de couplage (4), lorsque se produit un mouvement de désolidarisation au moment de l'immobilisation activée par l'unité de couplage.

6. Élément de raccordement (1) selon l'une quelconque des revendications précédentes, **caractérisé en ce que** l'unité de couplage (4) comporte un système de levier (10) qui prévoit un verrouillage de la partie conjuguée (3) par rapport à la bride (2) pour tube ou tuyau flexible, le système de levier (10) de l'unité de couplage (4) étant supporté par un ressort de pression (19) qui maintient le système de levier (10) dans une position de verrouillage pour l'immobilisation de la partie conjuguée (3) et de la bride (2) pour tube ou tuyau flexible, et une rampe (12) étant prévue sur le système de levier (10), laquelle s'ouvre lors d'une contre-pression, lorsque se produisent un mouvement relatif et un rapprochement de la bride (2) pour tube ou tuyau flexible et de la partie conjuguée (3).

7. Élément de raccordement (1) selon la revendication 6, **caractérisé en ce que** le système de levier (10) est muni d'un axe de rotation d'un levier de blocage (11), lequel est disposé perpendiculairement à une orientation axiale de la bride (2) pour tube ou tuyau flexible.

8. Élément de raccordement (1) selon l'une quelconque des revendications précédentes, **caractérisé en ce qu'**il est prévu un raccord rapide (24) qui induit une séparation entre les tubes du dispositif de chargement de fluide (21) et leur fermeture lorsque des forces sont appliquées sur l'élément de raccordement (1) fixé dans sa position finale uniquement par l'intermédiaire de l'unité de couplage (4), mais non encore par le dispositif de fixation (13).

9. Élément de raccordement (1) selon l'une quelconque des revendications précédentes, **caractérisé en ce que** le dispositif de fixation (13) comporte un actionnement hydraulique et/ou **en ce que** le dispositif de fixation (13) comporte un système d'immobilisation à actionner manuellement.

10. Élément de raccordement (1) selon l'une quelconque des revendications précédentes, **caractérisé en ce que** l'unité de couplage (4) est un élément de post-équipement.

11. Procédé permettant un assemblage étanche entre un assemblage à bride d'un dispositif de chargement de gaz liquéfié (21) avec un élément de raccordement selon la revendication 1 et un raccordement à un réservoir pour le chargement ou le déchargement du gaz liquéfié, une bride (2) pour tube ou tuyau flexible et une partie conjuguée (3) étant assemblées l'une à l'autre pour former l'assemblage à bride, ladite partie conjuguée (3) et ladite bride (2) pour tube ou tuyau flexible étant en grande partie immobilisées dans le sens axial dans une position préliminaire au moyen d'un enclenchement d'une unité de couplage (4) munie d'un levier de blocage (11), mais étant fixées, en outre, de manière mobile l'une par rapport à l'autre dans un sens de rotation, un positionnement précis étant possible sous l'effet d'une rotation de la bride (2) pour tube ou tuyau flexible par rapport à la partie conjuguée avant que la bride (2) pour tube ou tuyau flexible et la partie conjuguée (3) soient fixées dans la position finale au moyen d'un dispositif de fixation (13), séparé de l'unité de couplage et muni d'un dispositif de serrage et avant que soit réalisé un assemblage étanche aux fluides, une activation du dispositif de serrage induisant une compression de la partie conjuguée (3) avec la bride (2) pour tube ou tuyau flexible.

12. Procédé selon la revendication 11, **caractérisé en ce qu'**un blocage automatique au moment du rapprochement de la bride (2) pour tube ou tuyau flexible et de la partie conjuguée (3) au moyen de l'unité de couplage (4) se produit en vue d'une immobilisation préliminaire de la bride (2) pour tube ou tuyau flexible et de la partie conjuguée (3), ladite bride (2) pour tube ou tuyau flexible et ladite partie conjuguée (3) s'ajustant elles-mêmes au moment de leur rapprochement.

13. Procédé selon l'une quelconque des revendications précédentes, **caractérisé en ce que** dans une position, dans laquelle l'unité de couplage (4) est activée, mais le dispositif de fixation (13) n'est pas encore actionné, un couplage de sécurité veille à séparer l'assemblage en cas de dysfonctionnement.

14. Procédé selon l'une quelconque des revendications précédentes, **caractérisé en ce que** le rapprochement de la bride (2) pour tube ou tuyau flexible et de la partie conjuguée (3) est automatisé.

15. Utilisation d'une unité de couplage (4) selon l'une quelconque des revendications précédentes pour le post-équipement des assemblages à bride des dispositifs de chargement de fluide (21).
